# EUROPEAN PATENT SPECIFICATION

(11) **EP 4 533 776 B1**
(45) Date of publication and mention of the grant of the patent: **01.04.2026**
(21) Application number: 24734537.4
(22) Date of filing: 21.05.2024
(51) Int. Cl.: H04N 5/067, H04N 5/073, H04N 23/60, H04N 23/90

(54) **SELF-ADJUSTING SENSOR SYNCHRONIZATION**
SELBSTEINSTELLENDE SENSORSYNCHRONISATION
AUTO-AJUSTEMENT DE SYNCHRONISATION DE CAPTEUR

(30) Priority: 21.07.2023 US 202363515032 P
(43) Date of publication of application: 09.04.2025
(73) Proprietor: GOOGLE LLC, Mountain View CA 94043 (US)
(72) Inventor: WU, Vickie Youmin, Mountain View, California 94043 (US)
(74) Representative: Marks & Clerk GST
(86) International application number: PCT/US2024/030415
(87) International publication number: WO 2025/024036

(56) References cited:
- US-A1- 2011 267 269
- US-A1- 2012 162 511
- US-A1- 2022 030 167

## Description

### BACKGROUND

Many personal electronic devices come equipped with advanced display technology, reliable communication systems, and multiple digital camera assemblies. Much to the satisfaction of users of personal electronic devices, these multiple digital camera assemblies enable improved image quality, increased optical zoom levels, wide-angle photography, and other such benefits. Utilization of multiple digital camera assemblies often requires multi-sensor fusion, including, for example, fusion between sensor data from a main camera and an ultra-wide camera.

However, any two digital camera assemblies of the multiple digital camera assemblies within a personal electronic device may have different response characteristics. For instance, a first digital camera assembly may have a first response delay upon receiving a first request to capture a scene, while a second digital camera assembly may have a second response delay, different from the first response delay, upon receiving a second request to capture the scene that is concurrently transmitted with the first request. A difference in response delays, such as the difference between the first response delay and the second response delay, by digital camera assemblies within a personal electronic device can lead to scene capturing at different time intervals, causing technical challenges for frame merging and/or degradation of a fusion quality. Reference is made to patent document US 2012/162511 A1 (HEWES et al.) as exemplary of the background state of the art.

### SUMMARY

This document describes systems and techniques directed at self-adjusting synchronization for multi-sensor fusion. In aspects, a method of an electronic device for self-adjusting synchronization for multi-sensor fusion includes transmitting a synchronization signal to each image sensor of two or more image sensors; generating, based on the synchronization signal, a start of frame at each image sensor of the two or more image sensors; determining, at each image sensor of the two or more image sensors and responsive to generating the start of frame, a time delay between the synchronization signal and the start of frame; and adjusting, based on the time delay, a vertical blanking time for at least one image sensor of the two or more image sensors sufficient to advance or delay a future start of frame.

In additional aspects, an apparatus comprising an image sensor configured to perform the aforementioned method is disclosed.

In additional aspects not claimed, a computing system is disclosed that includes two or more image sensors, one or more processors, and computer-readable instructions, which, when executed by the processor, cause the computing system to perform the aforementioned method.

In further aspects not claimed, non-transitory computer-readable media are disclosed that include computer-readable instructions, which, when executed by a processor, cause a computing system to perform the aforementioned method.

This Summary is provided to introduce simplified concepts concerning a self-adjusting synchronization scheme for multi-sensor fusion, which is further described below in the Detailed Description and Drawings. This Summary is not intended to identify essential features of the claimed subject matter, nor is it intended for use in determining the scope of the claimed subject matter. The invention is set out in the independent claims.

### BRIEF DESCRIPTION OF THE DRAWINGS

The details of one or more aspects of self-adjusting synchronization for multi-sensor fusion are described in this document with reference to the following drawings. The same numbers are used throughout the drawings to reference like features and components:
FIG. 1 illustrates an example environment in which an electronic device utilizes an image capture manager to capture and fuse multiple frames in accordance with one or more implementations.
FIG. 2 illustrates an example implementation of the electronic device that can implement self-adjusting synchronization for multi-sensor fusion in accordance with one or more implementations.
FIG. 3 illustrates an exploded view of components of an example camera system, including an example image sensor, in accordance with one or more implementations.
FIG. 4 illustrates an example implementation of the camera system being operatively coupled to one or more processors in accordance with one or more implementations.
FIG. 5 illustrates an example implementation of the image capture manager from FIGs. 1 and 2 in more detail in accordance with one or more implementations.
FIG. 6 illustrates an example implementation of a self-adjusting synchronization scheme for multi-sensor fusion in accordance with one or more implementations.
FIG. 7 illustrates timing diagrams of an example periodic synchronization signal (sync), an example negative slack, and an example positive slack in accordance with one or more implementations.
FIG. 8 illustrates an example method of self-adjusting synchronization for multi-sensor fusion in accordance with some implementations.
FIG. 9 illustrates another example method of self-adjusting synchronization for multi-sensor fusion in accordance with some implementations.
FIG. 10 illustrates various components of an example computing system that can be implemented as any type of client, server, and/or electronic device as described with reference to the previous FIGs. 1-9 to implement self-adjusting synchronization for multi-sensor fusion in accordance with some implementations.

### DETAILED DESCRIPTION

### Overview

Original equipment manufacturers of various electronic devices, such as smartphones and laptops, often embed two or more cameras in electronic devices. These cameras enable a user of an electronic device to capture a static image (a single frame) or videos (multiple frames per second (FPS)) of a scene. In some applications, two or more cameras on a single electronic device may be jointly utilized to capture frames. To do so, multiple cameras may be synchronized to capture different perspectives simultaneously and/or create a composite view from multiple angles.

Some techniques to synchronize multiple cameras include hardware-based synchronization, software-based synchronization, or a combination thereof. For example, a hardware-based synchronization approach can employ specialized hardware devices to generate a common timing reference for all cameras. This can be achieved through the use of a master clock or timecode generator that sends synchronization signals (e.g., vertical synchronization signals) to each camera. When the cameras receive the synchronization signals, the cameras may commence their integration and stream-out process. In an additional example, some cameras have built-in features or software plugins that enable synchronization. Such cameras can use protocols like network time protocol (NTP) or precision time protocol (PTP) to synchronize their internal clocks. Software applications can then be used to align captured frames.

Such techniques, however, can have their downsides. For instance, one or more cameras, as well as the processor that transmits the synchronization signal, may operate at independent clock domains. Moreover, the processor may have no way of knowing how each camera responds to the synchronization signal (e.g., a response delay). As a result, the processor has no knowledge of how the synchronization signal is correlated to the frame start in each camera. In addition, due to, for example, response delays, clock drift, signal propagation delays, processing delays, and so on, the timing for a start of frame for any two cameras may be different from one another and from the synchronization signal.

As an example, upon receiving a synchronization signal, a first camera may respond within a couple of microseconds while a second camera may respond within a few milliseconds. These response time differences may be especially pronounced when any two cameras are sourced from different vendors. As a consequence of varying response times, when a processor receives captured frames from the cameras, the processor has to estimate which frames should be aligned and merged. For example, the first camera responds to the synchronization signal at time inter^{v}al N+1, while the second camera responds to the synchronization signal at time interval N+2. Without additional information, the processor could align the N+2 frame from the second camera with the N+1 frame from the first camera. Such a discrepancy makes the sensor fusion process more difficult and merge results more unpredictable.

To this end, this document describes systems and techniques for self-adjusting synchronization for multi-sensor fusion. In aspects, one or more processors transmit a synchronization signal to two or more image sensors effective to cause each of the two or more image sensors to generate a start of frame. Responsive to the start of frame, each of the two or more image sensors determines a time delay between the synchronization signal and a respective start of frame. Based on the time delay for each of the two or more image sensors, the two or more image sensors individually adjust a respective timing for a successive start of frame. The one or more processors can obtain timing information relating to the time delay and align captured frames based on the timing delay for each of the two or more image sensors. The one or more processors can then fuse aligned frames to enhance image quality.

Additional examples and implementations are described throughout this document. The document now turns to an example operating environment, after which example environments, devices, implementations, methods, and systems are described.

### Operating Environment

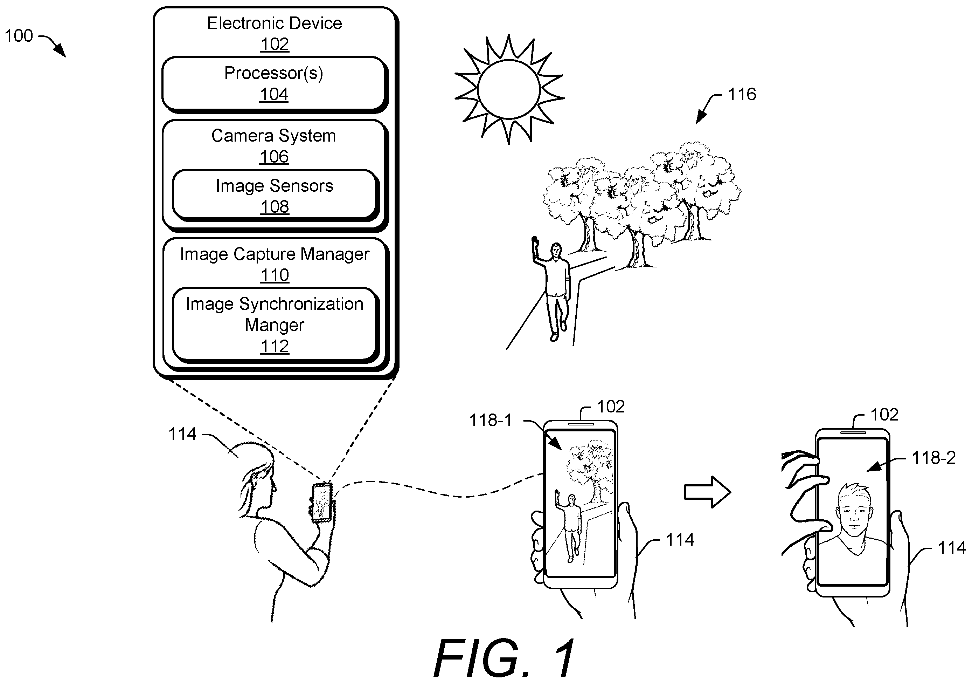

FIG. 1 illustrates an example environment 100 in which an electronic device utilizes an image capture manager to capture and fuse multiple image frames in accordance with one or more implementations. The example environment 100 includes an electronic device 102, which is illustrated as a smartphone as an example only. The electronic device 102 includes, or is operatively coupled to, one or more processors 104 and a camera system 106 having two or more image sensors 108. The electronic device 102 further includes an image capture manager 110 having an image synchronization manager 112. As further described below, the image capture manager 110 having the image synchronization manager 112 is configured to implement one or more aspects of self-adjusting synchronization for multi-sensor fusion.

In aspects, the image capture manager 110 directs each image sensor of the two or more image sensors 108 to capture an image frame of a scene 116, resulting in two or more captured image frames. The direction may, for example, be in response to a user 114 opening an image-capturing application or providing a command to the electronic device 102 to capture an image. Upon capturing the two or more image frames of the scene 116, the image synchronization manager 112 fuses the two or more captured image frames based on timing information in metadata transmitted from the two or more image sensors 108. In this way, a resulting fused frame can include more information (e.g., pixel data) and fuse temporally proximate image frames of the scene 116.

As an example, the user 114 may open an image-capturing application on the electronic device 102. In response, the image capture manager 110 directs one or more processors 104 to activate the two or more image sensors 108. The image capture manager 110 further directs the one or more processors 104 to periodically transmit a synchronization signal to each of the two or more image sensors 108. For one or more periodic transmissions, the two or more image sensors 108 determine a time delay between a given synchronization signal and a respective start of frame (e.g., a marker indicative of a beginning of a new frame in a stream of image data). At an end of frame (e.g., a marker indicative of a completion of an image frame in a stream of image data), each image sensor of the two or more image sensors 108 transmits timing information (e.g., data related to a time delay) in metadata to the one or more processors 104. Based on the timing information for each of the two or more image sensors 108, the two or more image sensors 108 independently (or at the instruction of the one or more processors 104) adjust a respective timing for a successive start of frame if a previous start of frame did not temporally align (within a threshold) with the given synchronization signal. In implementations, the two or more image sensors 108 can adjust a respective timing for a successive start of frame by increasing or decreasing a vertical blanking period (e.g., an interval of time during which no active image data is captured, extending from an end of one frame to a start of a successive frame).

Through such techniques, future start of frames for each image sensor of the two or more image sensors 108 may be temporally aligned with future synchronization signals (e.g., after one or more periodic transmissions). As a result, by the time the user 114 provides a command to the electronic device 102 to capture an image of the scene 116, respective start of frames for each image sensor of the two or more image sensors 108 may be temporally aligned (e.g., approximately). Irrespective of whether a first start of frame of a first image sensor and a second start of frame of a second image sensor are aligned, the one or more processors 104 can fuse temporally proximate image frames using metadata that is indicative of a timing delay for each image sensor of the two or more image sensors 108. In this way, a feedback loop is established between the one or more processors 104 and two or more image sensors 108, enabling start of frame alignment and image quality enhancement.

A resulting fused frame can then be presented as a digital image 118-1 at a display of the electronic device 102. For example, two image sensors of the two or more image sensors 108 may be positioned on a back side of the electronic device 102 opposite, for example, a display. The two image sensors may also be positioned behind lenses set at differing zoom levels. A lens of a first image sensor of the two or more image sensors 108 may be configured to capture a first image frame of the scene 116 with a low zoom. A lens of a second image sensor of the two or more image sensors 108 may be configured to capture a second image frame of the scene 116 with a high zoom. As a result, when the first image frame and the second image frame, which were captured concurrently or near simultaneously, are fused together, the resulting fused frame may include no motion artifacts (e.g., which may otherwise occur due to an offset timing between the first image frame and the second image frame). Still further, the resulting fused frame may include enhanced image data, such that when the user 114 zooms in on a digital image 118-2 at the display of the electronic device 102, as illustrated in FIG. 1, the digital image 118-2 may include reduced pixelation, greater levels of detail, and/or better focus. These techniques may be accomplished with or without temporally aligned start of frames between the first image sensor and the second image sensor (e.g., due to an insufficient amount of time for adjustment).

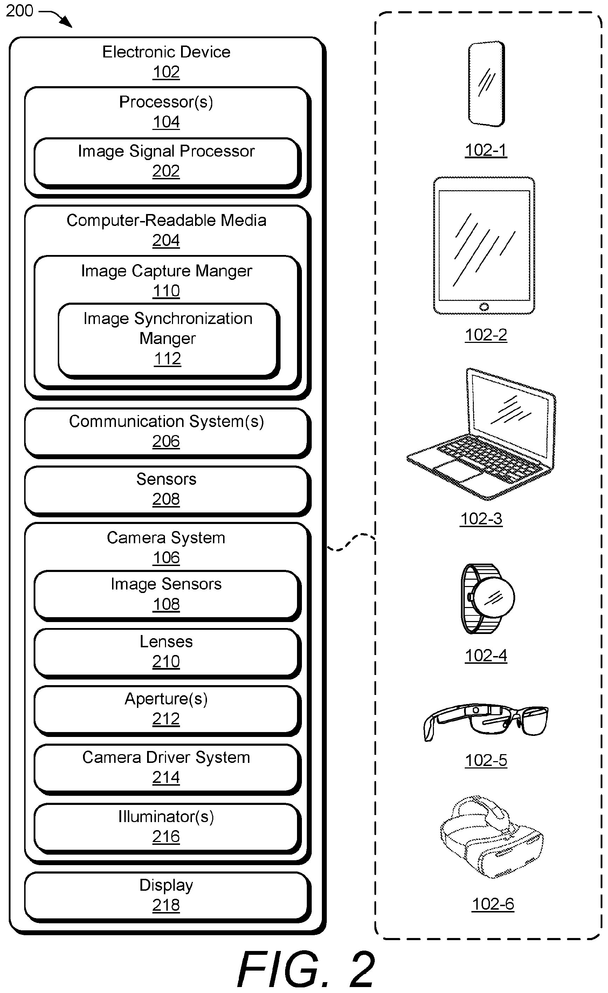

Consider FIG. 2, which illustrates an example implementation 200 of the electronic device 102 configured to implement self-adjusting synchronization for multi-sensor fusion in accordance with one or more implementations. The electronic device 102 of FIG. 2 is illustrated as a variety of example devices, including a smartphone 102-1, a tablet 102-2, a laptop 102-3, a computing watch 102-4, computing spectacles 102-5, and an artificial reality/virtual reality (AR/VR) headset 102-6. Although not shown, the electronic device 102 may also be implemented as any of a mobile station (e.g., fixed- or mobile-STA), a mobile communication device, a client device, a home automation and control system, an entertainment system, a gaming console, a personal media device, a health monitoring device, a drone, a camera, an Internet home appliance capable of wireless Internet access and browsing, an Internet of Things device, security systems, and the like. Note that the electronic device 102 can be wearable, non-wearable but mobile, or relatively immobile (e.g., desktops, appliances). Note also that the electronic device 102 can be used with, or embedded within, electronic devices or peripherals, such as in automobiles or as an attachment to a laptop computer. The electronic device 102 may include components or interfaces omitted from FIG. 2 for the sake of clarity or visual brevity.

In some implementations, the electronic device 102 includes a printed circuit board assembly (PCBA) on which components and interconnects of the electronic device 102 are embodied. Alternatively or additionally, components of the electronic device 102 can be embodied on other substrates, such as flexible circuit material or other insulative material, and, optionally, can be operatively coupled to the PCBA. The electronic device 102 may also include a housing that defines at least one internal cavity. In implementations, the housing may be supported and/or defined by a frame. The housing includes an exterior surface and an opposing interior surface. The exterior surface may include at least one portion in contact with a physical medium (e.g., hair, skin, tissue, clothing) associated with a user or a physical medium (e.g., mount, pad) associated with auxiliary equipment. For example, the computing watch 102-4 can include an exterior surface in contact with a wrist of a user. In another example, the smartphone 102-1 can include an exterior surface in contact with a charging stand. In aspects, the housing may be any of a variety of plastics, metals, acrylics, or glasses. In an implementation, the exterior surface of the housing includes one or more openings, such as a port (e.g., a barometric port).

As illustrated, the electronic device 102 includes one or more processors 104 and computer-readable media 204. The processors 104 may include any suitable single-core or multi-core processor (e.g., an application processor (AP), a digital-signal processor (DSP), a central processing unit (CPU), a graphics processing unit (GPU), a computer vision and machine-learning (CVML) processor). The processors 104 may be configured to execute instructions or commands stored within the computer-readable media 204. In an example implementation, the electronic device 102 includes a multi-core system-on-chip (SoC) that is configured to parallelly execute instructions or commands stored within the computer-readable media 204. Applications and/or an operating system (not shown) implemented as computer-readable instructions on the computer-readable media 204 can be executed by the computer processors 104 to provide some or all of the functionalities described herein. For example, the computer-readable media 204 can include the image capture manager 110 and the image synchronization manager 112. In additional implementations, the image capture manager 110 and/or the image synchronization manager 112 can be stored at a remote computing system and accessed by the electronic device 102 via a wired or wireless connection.

The computer-readable media 204 may be stored within one or more non-transitory storage devices such as a random access memory (RAM, dynamic RAM (DRAM), non-volatile RAM (NVRAM), or static RAM (SRAM)), a read-only memory (ROM), or a flash memory, a hard drive, a solid-state drive (SSD), or any type of media suitable for storing electronic instructions, each coupled with a computer system bus. The term "coupled" may refer to two or more elements that are in direct contact (physically, electrically, magnetically, optically, etc.) or to two or more elements that are not in direct contact with each other but still cooperate and/or interact with each other.

At least one processor of the one or more processors 104 includes an image signal processor 202 (e.g., image processing engine, image processing unit (IPU), image processor). In an example implementation, the image signal processor 202 can be operatively coupled to, or integrated within, a multi-core SoC (e.g., an application processor). The image signal processor 202 may be a dedicated processing unit that is responsible for converting raw image data to a digital image, as well as processing and enhancing image data captured by a camera system (e.g., camera system 106). In some examples, the image signal processor 202 can perform demosaicing (e.g., to reconstruct full-color information), noise reduction, white balance, tone mapping and dynamic range compression, sharpening and detail enhancement, image stabilization, and/or compression and encoding.

The electronic device 102 may further include, or be operatively coupled to, communication systems 206. The communication systems 206 enable communication of device data, such as received data, transmitted data, or other information as described herein, and may provide connectivity to one or more networks and other devices connected therewith. Example communication systems include NFC transceivers, WPAN radios compliant with various IEEE 802.15 (Bluetooth^{®}) standards, WLAN radios compliant with any of various IEEE 802.11 (WiFi^{®}) standards, WWAN (3GPP-compliant) radios for cellular telephony, wireless metropolitan area network (WMAN) radios compliant with various IEEE 802.16 (WiMAX^{®}) standards, infrared (IR) transceivers compliant with an Infrared Data Association (IrDA) protocol, and wired local area network (LAN) Ethernet transceivers. Device data communicated over the communication systems 206 may be packetized or framed depending on a communication protocol or standard by which the electronic device 102 is communicating. The communication systems 206 may include wired interfaces, such as Ethernet or fiber-optic interfaces for communication over a local network, a private network, an intranet, or the Internet. Alternatively or additionally, the communication systems 206 may include wireless interfaces that facilitate communication over wireless networks, such as wireless LANs, cellular networks, or WPANs.

Further illustrated, the electronic device 102 includes a plurality of sensors 208. The plurality of sensors 208 may obtain information regarding a local environment of the electronic device 102. For example, the plurality of sensors 208 can include any of a variety of sensors, such as an audio sensor (e.g., a microphone), a touch-input sensor (e.g., a touchscreen), proximity sensors (e.g., capacitive sensors, radar sensors), a depth sensor (e.g., a range estimator), or an ambient light sensor (e.g., a photodetector). In one example, the electronic device 102 utilizes a proximity sensor of the plurality of sensors 208 to adjust a zoom level of a first image sensor to a low zoom and a zoom level of a second image sensor to a high zoom.

The electronic device 102 further includes the camera system 106 having the two or more image sensors 108, lens(es) 210, and apertures 212. The two or more image sensors 108, implemented as, for example, complementary metal oxide semiconductors (CMOSs), charge-coupled device (CCD) sensors, and/or any other such image-capturing technology, can be configured to capture light, such as light reflected off of one or more objects in a scene, and generate a digital signal (e.g., data relating to light of a captured scene).

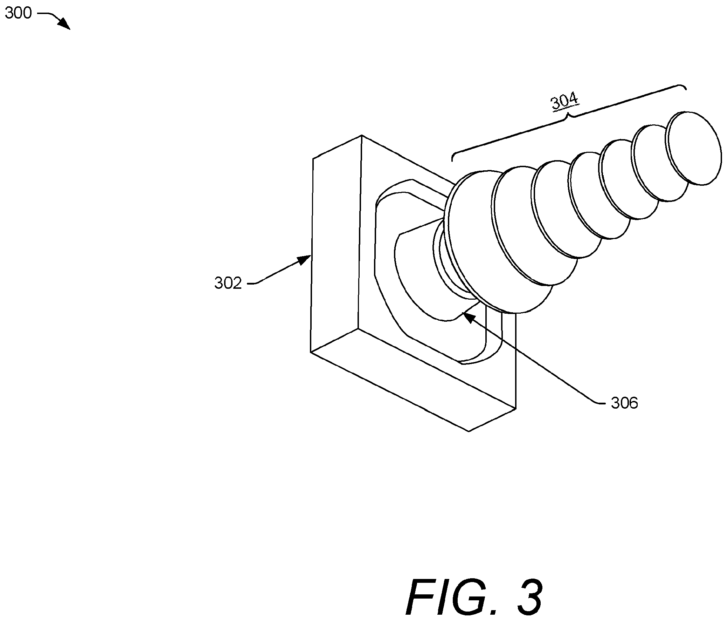

Consider FIG. 3, which illustrates an exploded view 300 of components of an example camera system 106, including an example image sensor 302, in accordance with one or more implementations. Components of the camera system 106 may be disposed partially or fully within the housing of the electronic device 102. In implementations, the housing of the electronic device 102 includes an opening in which, or behind which, one or more components of the respective camera system 106 may reside. In implementations, the image sensor 302 includes light-sensitive materials, micro-lens(es), and/or micro-electrical components.

In one example, a CMOS image sensor may include one or more of a micro-lens array, a color filter array (CFA), a photodiode layer, pixel transistors, one or more bonding layers, and/or an application-specific integrated circuit (ASIC). In more detail, the micro-lens array may include small lenses that collect and focus light onto light-sensitive areas of the CMOS image sensor. The CFA may be a patterned layer that includes a mosaic of tiny color filters placed over one or more photosites (sometimes referred to as pixels) to capture color information. The CFA may allow different wavelengths of light to pass through to the photosites. As an example, a CFA pattern may include a Bayer filter, which may consist of red, green, and blue filters. A respective photosite of the one or more photosites may be an individual light-sensitive area that captures light and converts it into an electrical signal. In some implementations, each photosite may correspond to a single pixel in a digitally reproduced image of a scene. The photosites may be arranged to form a pixel array (e.g., in a grid pattern). Each photosite may include a photodiode, defining the photodiode layer. Each of the photodiodes may be composed of a semiconductor material, such as silicon. The photodiodes may experience a photoelectric effect (e.g., emission of electrons in response to electromagnetic radiation) due to incident light from a scene. Pixel transistors can then receive electrical signals from each of the photodiodes. The pixel transistors may provide gain and/or buffer of electrical charge from the photodiodes. The ASIC may be implemented as a logic layer and may include readout circuitry, timing and control circuitry, and an output interface. The readout circuitry may convert an accumulated electrical charge from each of the photodiodes into a digital signal. As an example, the readout circuitry may include one or more amplifiers, analog-to-digital converters (ADCs), and signal processing circuits. The timing and control circuitry controls the operation and timing of the image sensor 302, including exposure time, pixel readout, and synchronization with other hardware components of the image sensor 302 and/or the electronic device 102. The output interface enables data transmission from the image sensor 302 to other hardware components, such as one or more processors and memory.

Lenses 210 (e.g., lenses 304) can include, for example, glass lenses or plastic lenses (e.g., elements), which focus light of a scene on at least one image sensor (e.g., image sensor 302) of the two or more image sensors 108. By adjusting a distance between the lenses 210 and/or a distance between the one or more lenses 210 and a respective image sensor 302, the camera system 106 can alter a magnification (e.g., zoom in, zoom out) and adjust a level of focus of a scene. Although FIG. 3 illustrates the example camera system 106 as having seven lenses 304, the number of lenses 304 may vary for each of the two or more image sensors 108.

The camera system 106 may further include an aperture 306 for each of the two or more image sensors 108. In implementations, a respective aperture 306 is configured to adjust an amount of incident light at a respective image sensor 302 by adjusting a size of an opening through which light from a scene travels. An aperture 306 may also influence a depth of field (DOF) in a digitally reproduced image.

Turning back to FIG. 2, the camera system 106 further includes a camera driver system 214 and, optionally, one or more illuminators 216 (e.g., camera flash bulbs). The camera driver system 214 (e.g., an output interface of a respective image sensor) enables communication between the camera system 106 and other components of the electronic device 102, such as the processor(s) 104 and computer-readable media 204. The camera driver system 214 can be initiated by any suitable trigger, such as a user input received via an actuated control or a press button (e.g., a graphical user interface (GUI) button), or a signal received from one or more sensors 208. The camera driver system 214 can also control settings for the camera system 106, including settings for gain, white balance, focus, zoom, image stabilization, and exposure duration, in response to commands from the processor(s) 104.

In implementations, one or more of these hardware components of the camera system 106, including the image sensors 108, lens(es) 210, and aperture(s) 212, may be adjusted manually by a user (e.g., via commands provided at a user interface, via physical adjustment) and/or automatically by one or more algorithms stored in the computer-readable media 204 and executed by the one or more processors 104. For example, a respective aperture of the one or more apertures 212 can be automatically controlled by an auto-exposure algorithm. The auto-exposure algorithm can calculate and adjust exposure parameters (e.g., an exposure time, a gain, an f-number) based on an exposure value.

In additional examples, one or more lenses 210 and/or one or more apertures 212 can be automatically controlled by an auto-focus algorithm. In one example, the camera system 106 can be operatively coupled to a range estimator, which can determine a distance from an object to the camera system 106 so that the auto-focus algorithm can automatically adjust a focus of the camera system 106. In another example, the focus of the camera system 106 may be adjusted by a passive autofocus technique. The passive autofocus technique may use image data captured at a respective image sensor 302 to determine whether an image is in focus and adjust one or more lenses 210 to compensate. For instance, the passive autofocus technique can involve an autofocus algorithm detecting a contrast within image data and adjusting a focus until the contrast is maximized. In yet another example, the focus of the camera system 106 may be adjusted by a phase-detection autofocus technique.

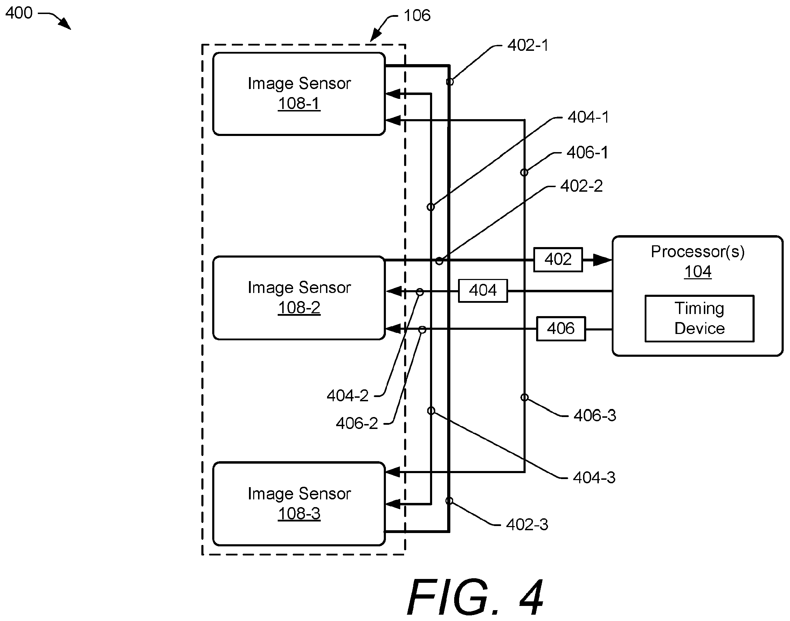

FIG. 4 illustrates an example implementation 400 of the camera system 106 being operatively coupled to one or more processors 104 in accordance with one or more implementations. As illustrated, for example only and not by way of limitation, the two or more image sensors 108 of the camera system 106 include three image sensors (e.g., a first image sensor 108-1, a second image sensor 108-2, a third image sensor 108-3). Further, for example only and not by way of limitation, each image sensor of the three image sensors is operatively coupled to one or more processors 104. In some implementations, at least one of the one or more processors 104 is integrated within a multi-core SoC and at least one of the three image sensors is operatively coupled to the at least one processor 104 via connection to the multi-core SoC.

In an example implementation, lens(es) of the first image sensor 108-1 are integrated on a front-facing portion of the electronic device 102, lens(es) of the second image sensor 108-2 are integrated on a rear-facing portion of the electronic device 102, and lens(es) of the third image sensor 108-3 are integrated on the rear-facing portion of the electronic device 102. In this way, the electronic device 102 includes a front-facing camera and two rear-facing cameras to capture a first scene of a region in front of the electronic device 102 and a second scene of a region behind the electronic device 102.

As illustrated, each image sensor of the three image sensors may be operatively coupled to the one or more processors 104 via an output mobile industry processor interface (MIPI) interface 402 (e.g., first output MIPI interface 402-1, second output MIPI interface 402-2, third output MIPI interface 402-3). For instance, the first image sensor 108-1 may be operatively coupled to the one or more processors 104 via the first output MIPI interface 402-1 (e.g., a single-lane MIPI), while the second image sensor 108-2 may be operatively coupled to the one or more processors 104 via the second output MIPI interface 402-2 (e.g., a multi-lane MIPI) and the third image sensor 108-3 may be operatively coupled to the one or more processors 104 via the third output MIPI interface 402-3. One or more of the output MIPI interfaces 402 may be a camera serial interface (CSI), such as MIPI CSI-2. Alternatively or additionally, one or more of the output MIPI interfaces 402 may be an inter-integrated circuit, such as an MIPI I2C or MIPI I3C. In implementations, one or more of the image sensors 108 can transmit data over the output MIPI interfaces 402 to the one or more processors 104. For example, the first image sensor 108-1 can transmit metadata having timing information relating to a time delay (e.g., a duration of time between a synchronization signal and a start of frame) over the first output MIPI interface 402-1.

Further illustrated, each of the two or more image sensors 108 may be operatively coupled to the one or more processors 104 via an input MIPI interface 404 (e.g., first input MIPI interface 404-1, second input MIPI interface 404-2, third input MIPI interface 404-3). For instance, the first image sensor 108-1 may be operatively coupled to the one or more processors 104 via the first input MIPI interface 404-1 (e.g., a single-lane MIPI), while the second image sensor 108-2 may be operatively coupled to the one or more processors 104 via the second input MIPI interface 404-2 (e.g., a multi-lane MIPI) and the third image sensor 108-3 may be operatively coupled to the one or more processors 104 via the third input MIPI interface 404-3. One or more of the input MIPI interfaces 404 may be a CSI, such as MIPI CSI-2. Alternatively or additionally, one or more of the input MIPI interfaces 404 may be an inter-integrated circuit, such as an MIPI I2C or MIPI I3C. In implementations, one or more of the image sensors 108 can receive data over the input MIPI interfaces 404 from the one or more processors 104. For example, the one or more processors 104 transmit instructions over the input MIPI interfaces 404 to program register settings (e.g., a tolerance register) at one or more image sensors of the three image sensors. Programming register settings (e.g., parameterization) may include programming a tolerance of timing variations (e.g., a tolerance threshold), such as a time skew, at one or more image sensors of the three image sensors. In implementations, a given register includes a threshold value that permits the associated image sensor to have a predefined time difference between a start of frame and a synchronization signal.

Still further illustrated, each image sensor of the three image sensors may be operatively coupled to the one or more processors 104 via a synchronization interface 406 (e.g., a first synchronization interface 406-1, a second synchronization interface 406-2, a third synchronization interface 406-3). The synchronization interfaces 406 enable the one or more processors 104 to transmit synchronization signals to the three image sensors. For instance, the first image sensor 108-1 may be operatively coupled to the one or more processors 104 via the first synchronization interface 406-1, the second image sensor 108-2 may be operatively coupled to the one or more processors 104 via the second synchronization interface 406-2, and the third image sensor 108-3 may be operatively coupled to the one or more processors 104 via the third synchronization interface 406-3. The synchronization interfaces 406 may be specific to the camera system or follow a standardized protocol. For example, the synchronization interfaces 406 can include general-purpose input/output (GPIO) pins, **MIPI** CSI interfaces, dedicated synchronization lines, and/or embedded synchronization protocols. In at least some implementations, the input **MIPI** interfaces 404 can transmit synchronization signals in lieu of synchronization interfaces 406.

In implementations, the one or more processors 104 include (or are operatively coupled to) a timing device (e.g., a master clock, clock generator) that generates synchronization signals. These synchronization signals may be transmitted over the synchronization interfaces 406 to each of the three image sensors. However, because response times may vary between the three image sensors upon receiving a respective synchronization signal, each image sensor of the three image sensors may be operatively coupled to the one or more processors 104 via the output MIPI interfaces 402. In this way, a feedback loop can be established between the three image sensors and the one or more processors 104, and, using the timing information transmitted over the output MIPI interfaces 402, the one or more processors 104 can more reliably fuse image frames from the two or more image sensors 108.

Turning back to FIG. 2, momentarily, the electronic device 102 can also include a display 218. The display 218 can include any suitable visual display device, such as a liquid crystal display (LCD), a thin film transistor (TFT) LCD, an in-place switching (IPS) LCD, a capacitive touchscreen display, an organic light-emitting diode (OLED) display, an active-matrix organic light-emitting diode (AMOLED) display, a super AMOLED display, or the like. The display 218 may be referred to as a screen, such that content may be displayed on-screen. For example, responsive to execution of instructions in the computer-readable media 204, the one or more processors 104 can direct the display 218 to present a static image (a single frame) or a video (multiple FPS) of a scene as captured by the camera system 106.

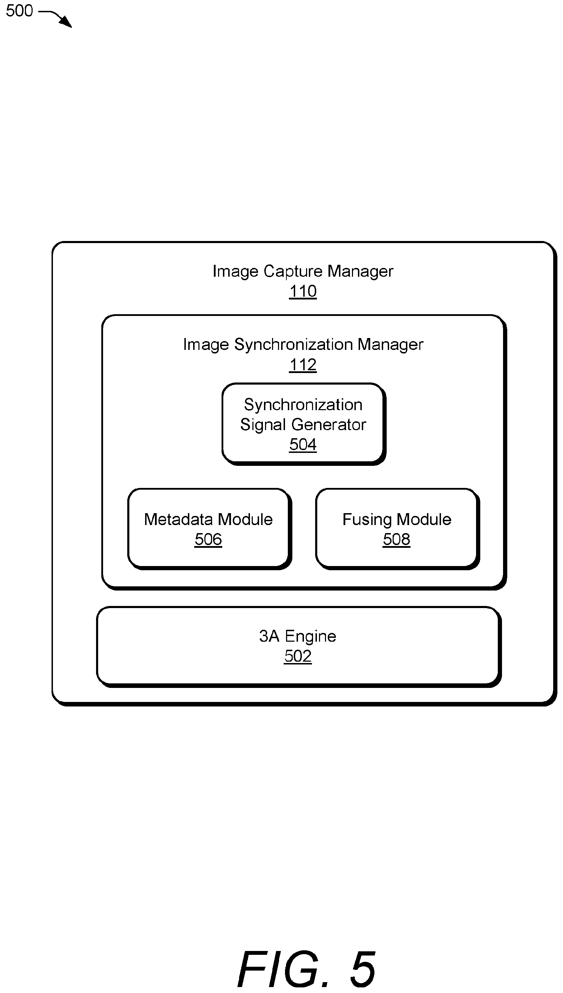

FIG. 5 illustrates an example implementation 500 of the image capture manager 110 from FIGs. 1 and 2 in more detail in accordance with one or more implementations. Although FIG. 5 shows various entities and components as part of the image capture manager 110, any of these entities and components may be separate from the image capture manager 110 such that the image capture manager 110 accesses and/or communicates with them to implement and/or facilitate self-adjusting synchronization for multi-sensor fusion. Further, various implementations of the image capture manager 110 and/or components and entities therein can include an SoC, one or more integrated circuits (ICs), a processor with embedded processor instructions or configured to access processor instructions stored in memory, hardware with embedded firmware, one or more algorithms, machine-learned techniques, or any combination thereof. For example, execution of the image capture manager 110 can occur partially, or completely, on the image signal processor 202, one or more CPUs, an application processor, a multi-core SoC, and so on.

As illustrated in FIG. 5, the image capture manager 110 includes the image synchronization manager 112 and a "3A" (auto-focus, auto-white balance, auto-exposure) engine 502. The image synchronization manager 112 may include a synchronization signal generator 504, a metadata module 506, and a fusing module 508. Although not illustrated, the image capture manager 110 can also include additional entities and components, such as a facial recognition module for face authentication.

In aspects, the image capture manager 110 activates two or more image sensors (e.g., two or more image sensors 108). Activation of the two or more image sensors may be in response to a user (e.g., user 114) opening an image-capturing application, powering on the electronic device 102, or some other trigger event (e.g., motion detected by sensors 208). Concurrent with or subsequent to the activation, the image capture manager 110, via the image synchronization manager 112, utilizes the synchronization signal generator 504 to transmit (e.g., periodically) a synchronization signal to the two or more image sensors. The synchronization signal may be transmitted over synchronization interfaces 406 to each of the two or more image sensors. The synchronization signal generator 504 may be implemented as a timing device, for example.

Upon receiving the synchronization signal, each image sensor of the two or more image sensors 108 determines a duration of time between the synchronization signal and a respective start of frame. For example, a counter in a respective image sensor counts a duration of time between the synchronization signal and a nearest start of frame. In implementations, the duration of time can be either positive or negative. For instance, a positive duration of time ("positive slack") may be indicative of a synchronization signal being received at a respective image sensor after a temporally proximate (e.g., nearest) start of frame (e.g., during a stream on). A negative duration of time ("negative slack") may be indicative of a synchronization signal being received at a respective image sensor before a temporally proximate (e.g., nearest) start of frame (e.g., during a vertical blanking time, after a stream on is finished).

If a respective image sensor determines there to be positive slack, a finite-state machine (FSM) within a respective image sensor is configured to delay a future start of frame, for example, such that a duration of time between a future synchronization signal and the future start of frame is within the tolerance threshold. Delaying the future start of frame may be achieved by increasing a vertical blanking time. If a respective image sensor determines there to be negative slack, the FSM within a respective image sensor is configured to advance a future start of frame, for example, such that a duration of time between a future synchronization signal and a future start of frame is within the tolerance threshold. Advancing a future start of frame may be achieved by decreasing a vertical blanking time. In at least some implementations, the delaying or advancing of a future start of frame (e.g., by increasing or decreasing a vertical blanking time) may occur after receipt of one or more synchronization signals (e.g., gradually) depending on camera system parameters. For example, an FSM may gradually advance each successive future start of frame at a predetermined increment (e.g., a few microseconds, a couple milliseconds) until a duration of time between a future synchronization signal and a future start of frame is within the tolerance threshold after one or more synchronization signals. In this way, the two or more image sensors 108 can self-adjust to be aligned with synchronization signals.

At a start of frame or an end of frame, timing information from each image sensor relating to the duration of time between a given synchronization signal and a respective start of frame may be transmitted to the image capture manager 110 via the output **MIPI** interfaces 402 as, for example, embedded metadata. The image capture manager 110 may then utilize the metadata module 506 to extract the timing information for each of the two or more image sensors 108. In this way, when the image capture manager 110 receives two or more image frames from the two or more image sensors 108, the image capture manager 110 aligns image frames based on the timing information in the metadata. As a result, the image capture manager 110 can, using the fusing module 508, fuse (e.g., merge) temporally proximate captured frames based on the timing information. By so doing, instances of misaligned captured frames can be reduced, and image quality of fused frames can be improved.

In some implementations, the two or more image sensors 108 may operate at common multiple frequencies. For instance, a frame rate of a first image sensor may operate at 60 hertz, while a frame rate of a second image sensor may operate at 30 hertz. In still further implementations, the synchronization signal generator 504 is configured to periodically generate synchronization signals at the same frequency of the fastest image sensor frame rate (e.g., 30 hertz). In additional implementations, the two or more image sensors 108 may be configured to not abort captured frames.

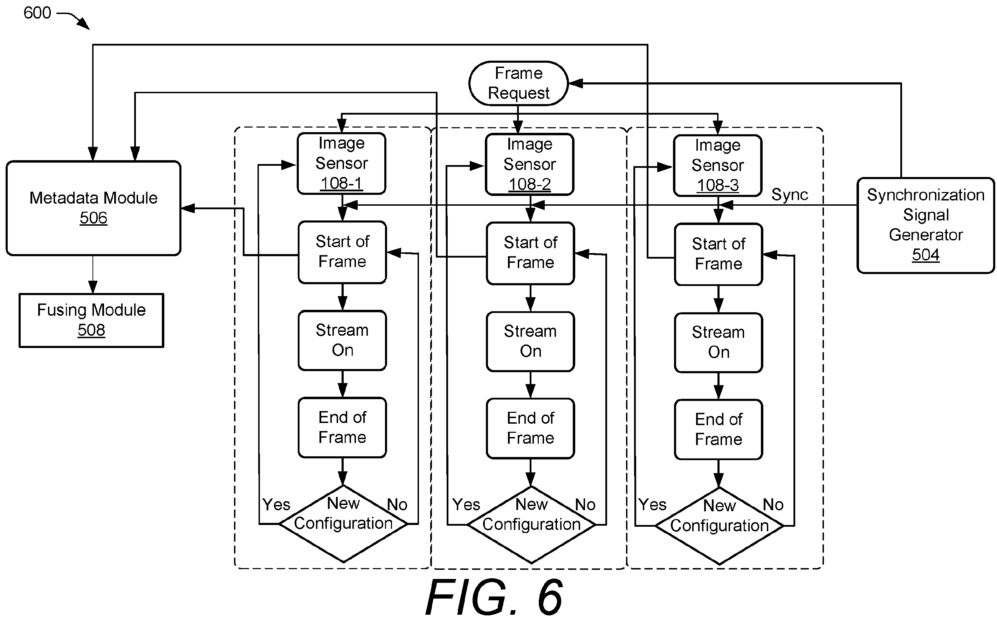

These and other capabilities and configurations, as well as ways in which entities of FIG. 5 act and interact, are set forth in greater detail below. These entities may be further divided, combined, and so on. The environment 100 of FIG. 1, the example implementation 200 of FIG. 2, and the detailed illustrations of FIG. 6 through FIG. 7 illustrate some of many possible environments and devices capable of employing the described techniques.

### Example Implementations

FIG. 6 illustrates an example implementation 600 of a self-adjusting synchronization scheme for multi-sensor fusion in accordance with one or more implementations. In some implementations, the example implementation 600 is completely implemented on a single electronic device 102. In additional implementations, the example implementation 600 is implemented between multiple electronic devices. For instance, portions of the example implementation 600 are implemented at a first surveillance camera, a second surveillance camera, a third surveillance camera, and, optionally, a hub device. In another example, portions of the example implementation 600 are implemented on a portable electronic device and a server system.

As illustrated, the example implementation 600 includes a first image sensor 108-1, a second image sensor 108-2, and a third image sensor 108-3. One or more of these image sensors 108 can be implemented on one or more electronic devices. The example implementation 600 further includes a synchronization signal generator 504, a metadata module 506, and a fusing module 508 of an image capture manager 110 (not illustrated). Each of these components and entities of the image capture manager 110 can be implemented on one or more electronic devices.

Further illustrated, the synchronization signal generator 504 triggers a frame request and transmits a synchronization signal to each of the image sensors 108. In implementations, the synchronization signal generator 504 may trigger the frame request and transmit the synchronization signal concurrently. In alternative implementations, the synchronization signal generator 504 may trigger the frame request and transmit the synchronization signal sequentially.

Upon receiving the frame request and/or the synchronization signal, a respective image sensor generates a start of frame and begins reading out pixel data. For example, a respective image sensor first generates a start of frame and begins sequentially reading out pixel data row by row, line by line, following a raster pattern (e.g., stream on). After reading out a last row, the respective image sensor generates an end of frame (e.g., indicating the completion of reading out a current frame).

Each respective image sensor may determine a duration of time between the received synchronization signal and a respective start of frame. For example, a counter in a respective image sensor counts a duration of time between the received synchronization signal and a temporally proximate start of frame. In implementations, the duration of time (e.g., time delay) can be either positive or negative.

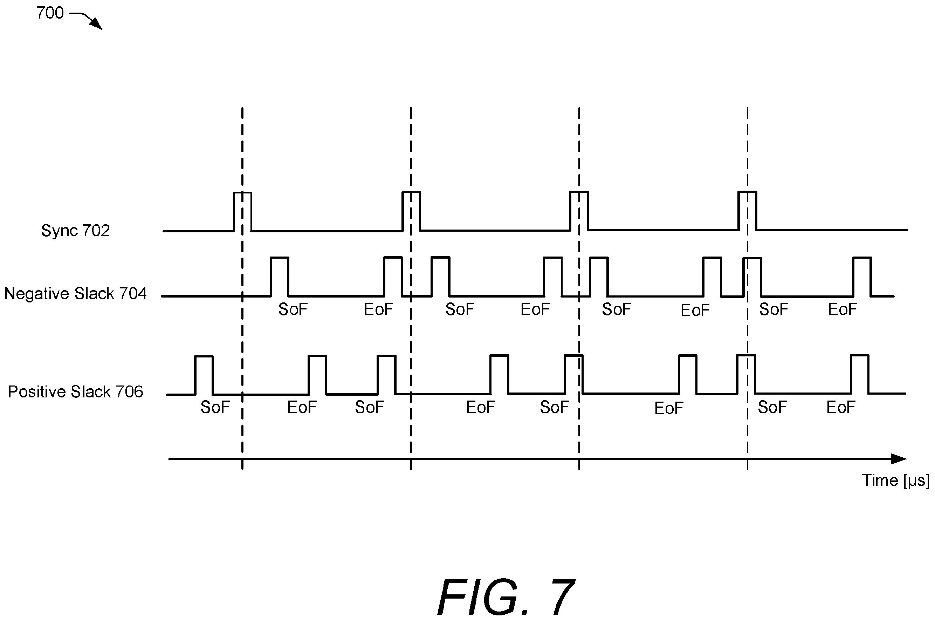

Consider FIG. 7, which illustrates example timing diagrams 700 of an example synchronization signal (sync 702), an example negative slack (negative slack 704), and an example positive slack (positive slack 706) in accordance with one or more implementations. As illustrated, the synchronization signal is periodically transmitted, for example, from a timing device integrated within an application processor. Further illustrated, a negative slack may occur when a synchronization signal is received at a respective image sensor before a temporally proximate (e.g., nearest) start of frame (SoF) (e.g., during a vertical blanking time, after a stream on is finished). A positive slack may occur when a synchronization signal is received at a respective image sensor after a temporally proximate (e.g., nearest) start of frame (e.g., during a stream on).

If a respective image sensor determines there to be positive slack, an FSM within the respective image sensor is configured to delay a future start of frame, for example, such that a duration of time between a future synchronization signal and a future start of frame is within the tolerance threshold (or closer to being within the tolerance threshold). Delaying a future start of frame may be achieved by increasing a vertical blanking time. If a respective image sensor determines there to be negative slack, an FSM within the respective image sensor is configured to advance a future start of frame, for example, such that a duration of time between a future synchronization signal and a future start of frame is within the tolerance threshold (or closer to being within the tolerance threshold). Advancing a future start of frame may be achieved by decreasing a vertical blanking time. In at least some implementations, the delaying or advancing of a future start of frame (e.g., by increasing or decreasing a vertical blanking time) may occur after receipt of one or more synchronization signals (e.g., gradually) depending on camera system parameters. For example, an FSM may gradually advance each successive future start of frame a few microseconds or milliseconds until a duration of time between a future synchronization signal and a future start of frame is within the tolerance threshold after one or more synchronization signals. In this way, image sensors can self-adjust to be aligned with synchronization signals.

Turning back to FIG. 6, if the start of frame is within the tolerance threshold, then the image sensor may refrain from increasing or decreasing a vertical blanking time (No branch of New Configuration) and generate a successive start of frame (e.g., upon receiving another synchronization signal, at a predetermined frequency). Otherwise, if the start of frame is not within the tolerance threshold, then the image sensor may increase or decrease a vertical blanking time (Yes branch of New Configuration) and generate a successive start of frame (e.g., upon receiving another synchronization signal, at a predetermined frequency). Further illustrated, each image sensor of the three image sensors transmits timing information embedded in metadata to the metadata module 506. In some implementations, this can be achieved by a respective image sensor first transmitting the metadata to a wireless communication component that wirelessly transmits the metadata to a server system having the metadata module 506.

The metadata module 506 can extract the timing information for each of the two or more image sensors 108, including the time delay between a received synchronization signal and a respective start of frame. In this way, when the image capture manager 110 (e.g., operating on the image signal processor 202) receives two or more image frames from the two or more image sensors 108, the image capture manager 110 can align the two or more image frames based on the timing information in the metadata. As a result, the image capture manager 110 can, using the fusing module 508, fuse (e.g., merge) temporally proximate captured frames based on the timing information. By so doing, if one or more image sensors of the two or more image sensors 108 (e.g., initially) respond at different speeds (e.g., response delays) upon receiving the frame request and/or the synchronization signal, the image capture manager 110 can align captured image frames to improve image quality of fused frames.

### Example Methods

Example methods 800 and 900 are described with reference to FIGs. 1-7 for example only and in accordance with one or more aspects of self-adjusting synchronization for multi-sensor fusion. These methods are shown as sets of blocks that specify operations performed but are not necessarily limited to the order or combinations shown for performing the operations by the respective blocks. For example, any number of the described method blocks can be skipped or combined in any order to implement a method or an alternate method. The techniques are not limited to performance by one entity or multiple entities operating on one device.

Generally, any of the components, modules, methods, and operations described herein can be implemented using software, firmware, hardware (e.g., fixed logic circuitry), manual processing, or any combination thereof. Some operations of example methods may be described in the general context of executable instructions stored on computer-readable media 204 that are local and/or remote to a computer processing system, and implementations can include software applications, programs, functions, and the like. Alternatively or in addition, any of the functionalities described herein can be performed, at least in part, by one or more hardware logic components, such as, and without limitation, field-programmable gate arrays (FPGAs), ASICs, application-specific standard products (ASSPs), SoC systems (SoCs), complex programmable logic devices (CPLDs), and the like.

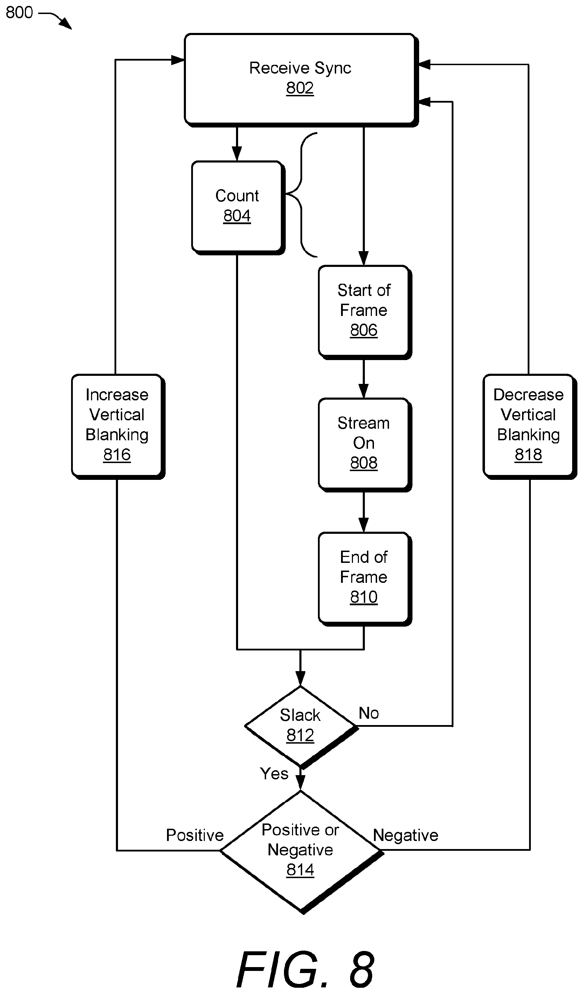

FIG. 8 illustrates an example method 800 of self-adjusting synchronization for multi-sensor fusion in accordance with some implementations. As illustrated, an image sensor (e.g., a respective image sensor of the two or more image sensors 108) may be configured to receive a synchronization signal 802 ("receive sync 802"). Further, the image sensor can be configured to generate a start of frame 806, stream on 808, and generate an end of frame 810. The image sensor can also be configured to count 804 an amount of time between receiving the synchronization signal 802 and generating the start of frame 806.

The image sensor can further be configured to determine if there is slack 812. If there is no slack (No branch of Slack 812), then the image sensor may repeat operations 802-812 without adjustment. If there is slack 812 (Yes branch of Slack 812), then the image sensor may be configured to determine if the slack is positive or negative 814. If the slack is positive (Positive branch), then the image sensor may increase a vertical blanking time 816. If the slack is negative (Negative branch), then the image sensor may decrease a vertical blanking time 818. The image sensor may then repeat one or more operations of 802-818.

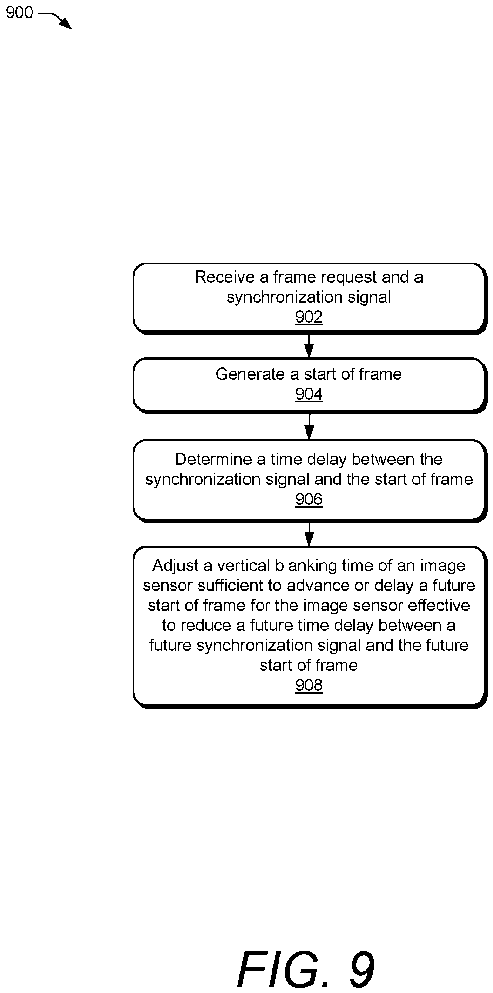

FIG. 9 illustrates another example method 900 of self-adjusting synchronization for multi-sensor fusion in accordance with some implementations. As illustrated, at 902, an image sensor receives a frame request and a synchronization signal. In implementations, the synchronization signal is a first synchronization signal of a plurality of synchronization signals. In further implementations, the plurality of synchronization signals are received at a consistent frequency. At 904, the image sensor generates a start of frame. In implementations, the image sensor generates the start of frame in response to receiving the frame request. In further implementations, the image sensor generates one or more additional start of frames in response to receiving the frame request and until receipt of an end frame request. At 906, the image sensor determines a time delay between the synchronization signal and the start of frame. In implementations, the image sensor determines the time delay via an integrated counter. At 908, the image sensor adjusts a vertical blanking time sufficient to advance or delay a future start of frame effective to reduce a future time delay between a future synchronization signal and the future start of frame.

### Example Computing System

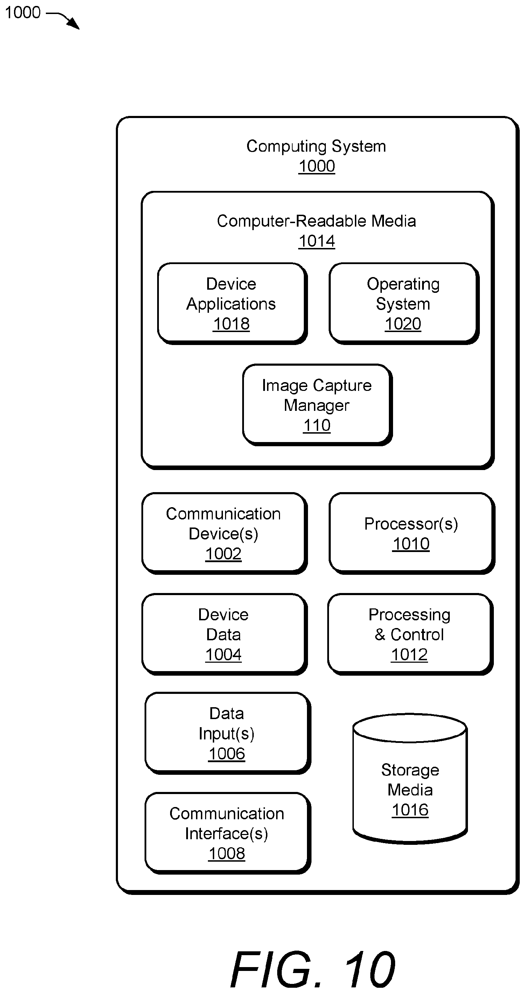

FIG. 10 illustrates various components of an example computing system 1000 that can be implemented as any type of client, server, and/or electronic device as described with reference to the previous FIGs. 1-9 to implement self-adjusting synchronization for multi-sensor fusion.

The computing system 1000 includes communication devices 1002 that enable wired and/or wireless communication of device data 1004 (e.g., radar data, authentication data, reference data, received data, data that is being received, data scheduled for broadcast, and data packets of the data). The device data 1004 or other device content can include configuration settings of the device, media content stored on the device, and/or information associated with a user of the device (e.g., an identity of a person within a radar field or customized air gesture data). Media content stored on the computing system 1000 can include any type of radar, biometric, audio, video, and/or image data. The computing system 1000 includes one or more data inputs 1006 via which any type of data, media content, and/or inputs can be received, such as human utterances, interactions with a radar field, touch inputs, user-selectable inputs or interactions (explicit or implicit), messages, music, television media content, recorded video content, and any other type of audio, video, and/or image data received from any content and/or data source.

The computing system 1000 also includes communication interfaces 1008, which can be implemented as any one or more of a serial and/or a parallel interface, a wireless interface, any type of network interface, a modem, and any other type of communication interface. The communication interfaces 1008 provide a connection and/or communication links between the computing system 1000 and a communication network by which other electronic, computing, and communication devices communicate data with the computing system 1000.

The computing system 1000 includes one or more processors 1010 (e.g., any of microprocessors, controllers, or other controllers) that can process various computer-executable instructions to control the operation of the computing system 1000 and to enable techniques for, or in which can be implemented, self-adjusting synchronization for multi-sensor fusion. Alternatively or additionally, the computing system 1000 can be implemented with any one or combination of hardware, firmware, or fixed logic circuitry that is implemented in connection with processing and control circuits, which are generally identified at 1012. Although not shown, the computing system 1000 can include a system bus or data transfer system that couples the various components within the device. A system bus can include any one or combination of different bus structures, such as a memory bus or memory controller, a peripheral bus, a universal serial bus, and/or a processor or local bus that utilizes any of a variety of bus architectures.

The computing system 1000 also includes computer-readable media 1014, such as one or more memory devices that enable persistent and/or non-transitory data storage (e.g., in contrast to mere signal transmission), examples of which include RAM, non-volatile memory (e.g., any one or more of a ROM, flash memory, EPROM, EEPROM, etc.), and a disk storage device. A disk storage device may be implemented as any type of magnetic or optical storage device, such as a hard disk drive, a recordable and/or rewriteable compact disc (CD), any type of a digital versatile disc (DVD), and the like. The computing system 1000 can also include a mass storage media device (storage media) 1016.

The computer-readable media 1014, which may be stored in data storage mechanisms, can include device data 1004 as well as various device applications 1018 and any other types of information and/or data related to operational aspects of the computing system 1000. For example, an operating system 1020 can be maintained as a computer application with the computer-readable media 1014 and executed on the processors 1010. The device applications 1018 may include an image capture manager 110, in any form of a control application, a software application, signal-processing and control modules, code that is native to a particular device, an abstraction module, a machine-learned model, and so on. The device applications 1018 may also include system components, engines, modules, or managers to implement self-adjusting synchronization for multi-sensor fusion. The computing system 1000 may also include, or have access to, one or more machine-learning systems.

In one example, the example computing system 1000 is a server system having an image capture manager (e.g., image capture manager 110) with an image synchronization manager (e.g., image synchronization manager 112). The image capture manager of the server system is configured to obtain one or more image frames from, for example, a client device and perform one or more actions of self-adjusting synchronization for multi-sensor fusion.

### Additional Examples

In the following section, additional examples are provided.

Example 1: A method for self-adjusting sensor synchronization, the method comprising: receiving, at an image sensor, a frame request and a synchronization signal; generating, based on the frame request and at the image sensor, a start of frame; determining, at the image sensor and responsive to generating the start of frame, a time delay between the synchronization signal and the start of frame; and adjusting, based on the time delay, a vertical blanking time of the image sensor sufficient to advance or delay a future start of frame for the image sensor effective to reduce a future time delay between a future synchronization signal and the future start of frame. Optionally, the frame request and synchronization signal may be transmitted to the image sensor by one or more processors. For example, an image capture manager, executed on the one or more processors, may transmit the frame request and synchronization signal to the image sensor.

Example 2: The method of example 1, wherein the adjusting of the vertical blanking time for the image sensor advances or delays the future start of frame for the image sensor at a first increment based on device parameters of the image sensor, the method further comprising: receiving, at the image sensor, a second synchronization signal, the second synchronization signal corresponding to the future synchronization signal; generating a second start of frame at the image sensor, the second start of frame corresponding to the future start of frame; determining, at the image sensor and responsive to generating the second start of frame, a second time delay between the second synchronization signal and the second start of frame, the second time delay corresponding to the future time delay; and adjusting, based on the determined second time delay, the vertical blanking time for the image sensor sufficient to advance or delay a second future start of frame for the image sensor effective to reduce a second future time delay between a second future synchronization signal and the second future start of frame.

Example 3: The method of example 2, wherein the adjusting of the vertical blanking time for the image sensor advances or delays the second future start of frame for the image sensor at a second increment based on the device parameters of the image sensor, and wherein the second increment is less than or equal to the first increment.

Example 4: The method of any of the preceding examples, further comprising: determining, responsive to adjusting the vertical blanking time for the image sensor, that another time delay between another synchronization signal and another start of frame is within a tolerance threshold; and refraining from adjusting the vertical blanking time for the image sensor.

Example 5: The method of example any of the preceding examples, wherein: the time delay between the synchronization signal and the start of frame is indicative of positive slack; and adjusting the vertical blanking time based on the indication of positive slack comprises delaying the future start of frame by increasing the vertical blanking time.

Example 6: The method of example any of examples 1 to 4, wherein: the time delay between the synchronization signal and the start of frame is indicative of negative slack; and adjusting the vertical blanking time based on the indication of negative slack comprises advancing the future start of frame by decreasing the vertical blanking time.

Example 7: The method of example any of the preceding examples, further comprising: programming, prior to transmitting the synchronization signal, a register of the image sensor, the programming effective to initialize a tolerance threshold for an acceptable length of the time delay. For example, the one or more processors may transmit instructions to the image sensor to program the register of the image sensor, prior to the one or more processors transmitting the synchronization signal to the image sensor.

Example 8: The method of any of the preceding examples, wherein the image sensor is one of a plurality of image sensors, each image sensor of the plurality of image sensors: receiving the frame request and the synchronization signal; and generating, based on the frame request, a respective start of frame.

Example 9: The method of example 8, wherein: the determining the time delay between the synchronization signal and the start of frame is determined by at least one image sensor of the plurality of image sensors and responsive to generating the respective start of frame; and the adjusting the vertical blanking time is adjusted by the at least one image sensor of the plurality of image sensors and based on the time delay.

Example 10: The method of example 9, further comprising: receiving, responsive to adjusting the vertical blanking time by the at least one image sensor of the plurality of image sensors, a plurality of synchronization signals at each of the plurality of image sensors, the plurality of synchronization signals received sequentially and at a consistent frequency; generating, for one or more synchronization signals of the plurality of synchronization signals and at each image sensor of the plurality of image sensors, a plurality of start of frames and a corresponding plurality of end of frames, a respective start of frame of the plurality of start of frames and a respective corresponding end of frame of the corresponding plurality of end of frames indicative of a respective generated image frame of a plurality of generated image frames; generating, at each image sensor of the plurality of image sensors, timing metadata relating to time delays between synchronization signals and start of frames for one or more of the plurality of generated image frames; aligning, based on the timing metadata relating to the time delays, two or more generated image frames of the plurality of generated image frames: fusing, based on the aligning of the two or more generated image frames, the two or more generated image frames sufficient to produce a fused frame; and presenting the fused frame on a display of an electronic device. Optionally, the aligning, fusing, and presenting may be carried out by the one or more processors. Optionally, the one or more image sensors may transit the timing metadata to the one or more processors.

Example 11: The method of example 10, wherein the plurality of synchronization signals received sequentially and at the consistent frequency are received at a frequency corresponding to a first frame rate of a first image sensor of the plurality of image sensors, the first frame rate of the first image sensor faster than a second frame rate of a second image sensor of the plurality of image sensors. For example, the one or more processors may have knowledge of, or be able to access, the frame rates of the image sensors. For example, the one or more processors may have access to a memory that stores the frame rates or may receive data indicating the frame rates of the image sensors. The one or more processors may transmit the synchronization signals at a frequency corresponding to the fastest frame rate of the image sensors.

Example 12: The method of any of the previous examples, wherein the plurality of image sensors comprise three image sensors, each of the three image sensors set at varying zoom and/or exposure levels.

Example 13: The method of example 12, wherein: the determining the time delay between the synchronization signal and the start of frame comprises determining by a first image sensor and a second image sensor of the three image sensors a first time delay and a second time delay, the first time delay different than the second time delay; and the adjusting the vertical blanking time by the at least one image sensor of the plurality of image sensors comprises adjusting, based on the first time delay and the second time delay, the vertical blanking time for the first image sensor and the second image sensor, respectively, sufficient to: advance the future start of frame for the first image sensor and the second image sensor; delay the future start of frame for the first image sensor and the second image sensor; advance the future start of frame for the first image sensor and delay the future start of frame for the second image sensor; or delay the future start of frame for the first image sensor and advance the future start of frame for the second image sensor.

Example 14: An apparatus comprising an image sensor configured to perform the method of any of examples 1-6.

Example 15: The apparatus of example 14, further comprising one or more additional image sensors and at least one processor configured to perform the method of any of claims 7-13.

Example 16: A method of an electronic device for self-adjusting synchronization for multi-sensor fusion, the method comprising: transmitting a synchronization signal to each image sensor of two or more image sensors; generating, based on the synchronization signal, a start of frame at each image sensor of the two or more image sensors; determining, at each image sensor of the two or more image sensors and responsive to generating the start of frame, a time delay between the synchronization signal and the start of frame; and adjusting, based on the time delay, a vertical blanking time for at least one image sensor of the two or more image sensors sufficient to advance or delay a future start of frame.

Example 17: The method of example 16, wherein the time delay between the synchronization signal and the start of frame is positive indicative of positive slack.

Example 18: The method of example 17, wherein adjusting the vertical blanking time based on the positive slack comprises delaying a future start of frame by increasing the vertical blanking time.

Example 19: The method of example 16, wherein the time delay between the synchronization signal and the start of frame is negative indicative of negative slack.

Example 20: The method of example 19, wherein adjusting the vertical blanking time based on the negative slack comprises advancing a future start of frame by increasing the vertical blanking time.

Example 21: The method of example 16, further comprising: programming, prior to transmitting the synchronization signal, a register of at least one image sensor of the two or more image sensors, the programming effective to initialize a tolerance threshold for the at least one image sensor.

Example 22: The method of example 21, wherein the adjusting of the vertical blanking time for the at least one image sensor is sufficient to advance or delay a future start of frame within a respective tolerance threshold for the at least one image sensor.

### Conclusion

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying Drawings and terms discussed herein may be indicative of one or more items or terms, and thus reference may be made interchangeably to single or plural forms of the items and terms in this written description.

Although implementations for self-adjusting synchronization for multi-sensor fusion have been described in language specific to certain features and/or methods, the subject of the appended Claims is not necessarily limited to the specific features or methods described. Rather, the specific features and methods are disclosed as example implementations for self-adjusting synchronization for multi-sensor fusion.

## Claims

1. A method for self-adjusting sensor synchronization, the method comprising:
receiving (902), at an image sensor (108), a frame request and a synchronization signal;
generating (904), based on the frame request and at the image sensor, a start of frame;
**characterized in that** the method further comprises:
determining (906), at the image sensor and responsive to generating the start of frame, a time delay between the synchronization signal and the start of frame; and
adjusting (908), based on the time delay, a vertical blanking time of the image sensor sufficient to advance or delay a future start of frame for the image sensor effective to reduce a future time delay between a future synchronization signal and the future start of frame.

2. The method of claim 1, wherein the adjusting of the vertical blanking time for the image sensor advances or delays the future start of frame for the image sensor at a first increment based on device parameters of the image sensor, the method further comprising:
receiving, at the image sensor, a second synchronization signal, the second synchronization signal corresponding to the future synchronization signal;
generating a second start of frame at the image sensor, the second start of frame corresponding to the future start of frame;
determining, at the image sensor and responsive to generating the second start of frame, a second time delay between the second synchronization signal and the second start of frame, the second time delay corresponding to the future time delay; and
adjusting, based on the determined second time delay, the vertical blanking time for the image sensor sufficient to advance or delay a second future start of frame for the image sensor effective to reduce a second future time delay between a second future synchronization signal and the second future start of frame.

3. The method of claim 2, wherein the adjusting of the vertical blanking time for the image sensor advances or delays the second future start of frame for the image sensor at a second increment based on the device parameters of the image sensor, and wherein the second increment is less than or equal to the first increment.

4. The method of any of the preceding claims, further comprising:
determining, responsive to adjusting the vertical blanking time for the image sensor, that another time delay between another synchronization signal and another start of frame is within a tolerance threshold: and
refraining from adjusting the vertical blanking time for the image sensor.

5. The method of any of the preceding claims, wherein:
the time delay between the synchronization signal and the start of frame is indicative of positive slack; and
adjusting the vertical blanking time based on the indication of positive slack comprises delaying the future start of frame by increasing the vertical blanking time.

6. The method of any of claims 1 to 4, wherein:
the time delay between the synchronization signal and the start of frame is indicative of negative slack; and
adjusting the vertical blanking time based on the indication of negative slack comprises advancing the future start of frame by decreasing the vertical blanking time.

7. The method of any of the preceding claims, further comprising:
programming, prior to transmitting the synchronization signal, a register of the image sensor, the programming effective to initialize a tolerance threshold for an acceptable length of the time delay.

8. The method of any of the preceding claims, wherein the image sensor is one of a plurality of image sensors, each image sensor of the plurality of image sensors:
receiving the frame request and the synchronization signal; and
generating, based on the frame request, a respective start of frame.

9. The method of claim 8, wherein:
the determining the time delay between the synchronization signal and the start of frame is determined by at least one image sensor of the plurality of image sensors and responsive to generating the respective start of frame; and
the adjusting the vertical blanking time is adjusted by the at least one image sensor of the plurality of image sensors and based on the time delay.

10. The method of claim 9, further comprising:
receiving, after adjusting the vertical blanking time by the at least one image sensor of the plurality of image sensors, a plurality of synchronization signals at each of the plurality of image sensors, the plurality of synchronization signals received sequentially and at a consistent frequency;
generating, for one or more synchronization signals of the plurality of synchronization signals and at each image sensor of the plurality of image sensors, a plurality of start of frames and a corresponding plurality of end of frames, a respective start of frame of the plurality of start of frames and a respective corresponding end of frame of the corresponding plurality of end of frames indicative of a respective generated image frame of a plurality of generated image frames;
generating, at each image sensor of the plurality of image sensors, timing metadata relating to time delays between synchronization signals and start of frames for one or more of the plurality of generated image frames;
aligning, based on the timing metadata relating to the time delays, two or more generated image frames of the plurality of generated image frames;
fusing, based on the aligning of the two or more generated image frames, the two or more generated image frames sufficient to produce a fused frame; and
presenting the fused frame on a display of an electronic device.

11. The method of claim 10, wherein the plurality of synchronization signals received sequentially and at the consistent frequency are received at a frequency corresponding to a first frame rate of a first image sensor of the plurality of image sensors, the first frame rate of the first image sensor faster than a second frame rate of a second image sensor of the plurality of image sensors.

12. The method of any of claims 9-11, wherein the plurality of image sensors comprise three image sensors, each of the three image sensors set at varying zoom and/or exposure levels.

13. The method of claim 12, wherein:
the determining the time delay between the synchronization signal and the start of frame comprises determining by a first image sensor and a second image sensor of the three image sensors a first time delay and a second time delay, the first time delay different than the second time delay; and
the adjusting the vertical blanking time by the at least one image sensor of the plurality of image sensors comprises adjusting, based on the first time delay and the second time delay, the vertical blanking time for the first image sensor and the second image sensor, respectively, sufficient to:
advance the future start of frame for the first image sensor and the second image sensor;
delay the future start of frame for the first image sensor and the second image sensor;
advance the future start of frame for the first image sensor and delay the future start of frame for the second image sensor; or
delay the future start of frame for the first image sensor and advance the future start of frame for the second image sensor.

14. An apparatus comprising:
an image sensor (108) configured to perform the method of any of claims 1-6.

15. The apparatus of claim 14, further comprising:
one or more additional image sensors and at least one processor configured to perform the method of any of claims 7-13.

## Patentansprüche

1. Verfahren zur selbsteinstellenden Sensorsynchronisation, wobei das Verfahren umfasst:
Empfangen (902), an einem Bildsensor (108), einer Frame-Anforderung und eines Synchronisationssignals;
Erzeugen (904) eines Frame-Starts basierend auf der Frame-Anforderung und an dem Bildsensor;
**dadurch gekennzeichnet, dass** das Verfahren ferner umfasst:
Bestimmen (906) einer Zeitverzögerung zwischen dem Synchronisationssignal und dem Frame-Start an dem Bildsensor und als Reaktion auf Erzeugen des Frame-Starts; und
Einstellen (908) einer vertikalen Sperrzeit des Bildsensors, die ausreicht, um einen zukünftigen Frame-Start für den Bildsensor vorzuverlegen oder zu verzögern, die wirksam ist, um eine zukünftige Zeitverzögerung zwischen einem zukünftigen Synchronisationssignal und dem zukünftigen Frame-Start zu reduzieren, basierend auf der Zeitverzögerung.

2. Verfahren nach Anspruch 1, wobei das Einstellen der vertikalen Sperrzeit für den Bildsensor den zukünftigen Frame-Start für den Bildsensor um ein erstes Inkrement basierend auf Vorrichtungsparametern des Bildsensors vorverlegt oder verzögert, wobei das Verfahren ferner umfasst:
Empfangen eines zweiten Synchronisationssignals an dem Bildsensor, wobei das zweite Synchronisationssignal dem zukünftigen Synchronisationssignal entspricht;
Erzeugen eines zweiten Frame-Starts an dem Bildsensor, wobei der zweite Frame-Start dem zukünftigen Frame-Start entspricht;
Bestimmen einer zweiten Zeitverzögerung zwischen dem zweiten Synchronisationssignal und dem zweiten Frame-Start an dem Bildsensor und als Reaktion auf Erzeugen des zweiten Frame-Starts, wobei die zweite Zeitverzögerung der zukünftigen Zeitverzögerung entspricht; und
Einstellen der vertikalen Sperrzeit für den Bildsensor, die ausreicht, um einen zweiten zukünftigen Frame-Start für den Bildsensor vorzuverlegen oder zu verzögern, die wirksam ist, um eine zweite zukünftige Zeitverzögerung zwischen einem zweiten zukünftigen Synchronisationssignal und dem zweiten zukünftigen Frame-Start zu reduzieren, basierend auf der bestimmten zweiten Zeitverzögerung.

3. Verfahren nach Anspruch 2, wobei das Einstellen der vertikalen Sperrzeit für den Bildsensor den zweiten zukünftigen Frame-Start für den Bildsensor um ein zweites Inkrement basierend auf den Vorrichtungsparametern des Bildsensors vorverlegt oder verzögert und wobei das zweite Inkrement kleiner als das oder gleich dem ersten Inkrement ist.

4. Verfahren nach einem der vorhergehenden Ansprüche, ferner umfassend:
Bestimmen als Reaktion auf das Einstellen der vertikalen Sperrzeit für den Bildsensor, dass eine andere Zeitverzögerung zwischen einem anderen Synchronisationssignal und einem anderen Frame-Start innerhalb eines Toleranzschwellenwerts liegt; und
Unterlassen des Einstellens der vertikalen Sperrzeit für den Bildsensor.

5. Verfahren nach einem der vorhergehenden Ansprüche, wobei:
die Zeitverzögerung zwischen dem Synchronisationssignal und dem Frame-Start positiven Schlupf angibt; und
Einstellen der vertikalen Sperrzeit basierend auf der Angabe von positivem Schlupf Verzögern des zukünftigen Frame-Starts durch Erhöhen der vertikalen Sperrzeit umfasst.

6. Verfahren nach einem der Ansprüche 1 bis 4, wobei:
die Zeitverzögerung zwischen dem Synchronisationssignal und dem Frame-Start negativen Schlupf angibt; und
Einstellen der vertikalen Sperrzeit basierend auf der Angabe von negativem Schlupf Vorverlegen des zukünftigen Frame-Starts durch Verringern der vertikalen Sperrzeit umfasst.

7. Verfahren nach einem der vorhergehenden Ansprüche, ferner umfassend:
Programmieren eines Registers des Bildsensors vor Übertragen des Synchronisationssignals, wobei das Programmieren wirksam ist, einen Toleranzschwellenwert für eine akzeptable Länge der Zeitverzögerung zu initialisieren.

8. Verfahren nach einem der vorhergehenden Ansprüche, wobei der Bildsensor einer einer Vielzahl von Bildsensoren ist, wobei jeder Bildsensor der Vielzahl von Bildsensoren:
die Frame-Anforderung und das Synchronisationssignal empfängt; und
basierend auf der Frame-Anforderung einen jeweiligen Frame-Start erzeugt.

9. Verfahren nach Anspruch 8, wobei:
das Bestimmen der Zeitverzögerung zwischen dem Synchronisationssignal und dem Frame-Start durch mindestens einen Bildsensor der Vielzahl von Bildsensoren und als Reaktion auf Erzeugen des jeweiligen Frame-Starts bestimmt wird; und
das Einstellen der vertikalen Sperrzeit durch den mindestens einen Bildsensor der Vielzahl von Bildsensoren und basierend auf der Zeitverzögerung eingestellt wird.

10. Verfahren nach Anspruch 9, ferner umfassend:
Empfangen einer Vielzahl von Synchronisationssignalen an jedem der Vielzahl von Bildsensoren nach Einstellen der vertikalen Sperrzeit durch den mindestens einen Bildsensor der Vielzahl von Bildsensoren, wobei die Vielzahl von Synchronisationssignalen sequenziell und mit einer konsistenten Frequenz empfangen wird;
Erzeugen einer Vielzahl von Frame-Starts und einer entsprechenden Vielzahl von Frame-Enden für ein oder mehrere Synchronisationssignale der Vielzahl von Synchronisationssignalen und an jedem Bildsensor der Vielzahl von Bildsensoren, wobei ein jeweiliger Frame-Start der Vielzahl von Frame-Starts und ein jeweiliges entsprechendes Frame-Ende der entsprechenden Vielzahl von Frame-Enden einen jeweiligen erzeugten Bild-Frame einer Vielzahl von erzeugten Bild-Frames angeben;
Erzeugen von Timing-Metadaten, die sich auf Zeitverzögerungen zwischen Synchronisationssignalen und Frame-Starts für einen oder mehrere der Vielzahl von erzeugten Bild-Frames beziehen, an jedem Bildsensor der Vielzahl von Bildsensoren;
Ausrichten von zwei oder mehr erzeugten Bild-Frames der Vielzahl von erzeugten Bild-Frames basierend auf den Timing-Metadaten, die sich auf die Zeitverzögerungen beziehen;
Fusionieren der zwei oder mehr erzeugten Bild-Frames, die ausreichen, um einen fusionierten Frame zu produzieren, basierend auf dem Ausrichten der zwei oder mehr erzeugten Bild-Frames; und
Präsentieren des fusionierten Frames auf einer Anzeige einer elektronischen Vorrichtung.

11. Verfahren nach Anspruch 10, wobei die Vielzahl von Synchronisationssignalen, die sequenziell und mit der konsistenten Frequenz empfangen wird, mit einer Frequenz empfangen wird, die einer ersten Frame-Rate eines ersten Bildsensors der Vielzahl von Bildsensoren entspricht, wobei die erste Frame-Rate des ersten Bildsensors schneller als eine zweite Frame-Rate eines zweiten Bildsensors der Vielzahl von Bildsensoren ist.

12. Verfahren nach einem der Ansprüche 9-11, wobei die Vielzahl von Bildsensoren drei Bildsensoren umfasst, wobei jeder der drei Bildsensoren auf variierende Zoom- und/oder Belichtungsstufen eingestellt ist.

13. Verfahren nach Anspruch 12, wobei:
das Bestimmen der Zeitverzögerung zwischen dem Synchronisationssignal und dem Frame-Start Bestimmen einer ersten Zeitverzögerung und einer zweiten Zeitverzögerung durch einen ersten Bildsensor und einen zweiten Bildsensor der drei Bildsensoren umfasst, wobei die erste Zeitverzögerung von der zweiten Zeitverzögerung verschieden ist; und
das Einstellen der vertikalen Sperrzeit durch den mindestens einen Bildsensor der Vielzahl von Bildsensoren Einstellen der vertikalen Sperrzeit für den ersten Bildsensor bzw. den zweiten Bildsensor basierend auf der ersten Zeitverzögerung und der zweiten Zeitverzögerung umfasst, die zu Folgendem ausreicht:
Vorverlegen des zukünftigen Frame-Starts für den ersten Bildsensor und den zweiten Bildsensor;
Verzögern des zukünftigen Frame-Starts für den ersten Bildsensor und den zweiten Bildsensor;
Vorverlegen des zukünftigen Frame-Starts für den ersten Bildsensor und Verzögern des zukünftigen Frame-Starts für den zweiten Bildsensor; oder
Verzögern des zukünftigen Frame-Starts für den ersten Bildsensor und Vorverlegen des zukünftigen Frame-Starts für den zweiten Bildsensor.

14. Einrichtung, umfassend:
einen Bildsensor (108), der konfiguriert ist, das Verfahren nach einem der Ansprüche 1-6 durchzuführen.

15. Einrichtung nach Anspruch 14, ferner umfassend:
einen oder mehrere zusätzliche Bildsensoren und mindestens einen Prozessor, der konfiguriert ist, das Verfahren nach einem der Ansprüche 7-13 durchzuführen.

## Revendications

1. Procédé d'auto-ajustement de synchronisation de capteur, le procédé comprenant :
la réception (902), au niveau d'un capteur d'image (108), d'une demande de trame et d'un signal de synchronisation ;
la génération (904), sur la base de la demande de trame et au niveau du capteur d'image, d'un début de trame ;
**caractérisé en ce que** le procédé comprend également :
la détermination (906), au niveau du capteur d'image et en réponse à la génération du début de trame, d'un délai entre le signal de synchronisation et le début de trame ; et
l'ajustement (908), sur la base du délai, d'un temps de suppression verticale du capteur d'image suffisant pour avancer ou retarder un début futur de trame pour le capteur d'image efficace pour réduire un délai futur entre un signal de synchronisation futur et le début futur de trame.

2. Procédé selon la revendication 1, dans lequel l'ajustement du temps de suppression verticale du capteur d'image avance ou retarde le début futur de trame pour le capteur d'image au niveau d'un premier incrément basé sur les paramètres de dispositif du capteur d'image, le procédé comprenant également :
la réception, au niveau du capteur d'image, d'un second signal de synchronisation, le second signal de synchronisation correspondant au futur signal de synchronisation ;
la génération d'un second début de trame au niveau du capteur d'image, le second début de trame correspondant au futur début de trame ;
la détermination, au niveau du capteur d'image et en réponse à la génération du second début de trame, d'un second délai entre le second signal de synchronisation et le second début de trame, le second délai correspondant au délai futur ; et
l'ajustement, sur la base du second délai déterminé, du temps de suppression verticale du capteur d'image suffisant pour avancer ou retarder un second début futur de trame pour le capteur d'image efficace pour réduire un second délai futur entre un second signal de synchronisation futur et le second début futur de trame.

3. Procédé selon la revendication 2, dans lequel l'ajustement du temps de suppression verticale du capteur d'image avance ou retarde le second début futur de trame pour le capteur d'image au niveau d'un second incrément basé sur les paramètres de dispositif du capteur d'image, et dans lequel le second incrément est moins ou égal au premier incrément.

4. Procédé selon l'une quelconque des revendications précédentes, comprenant également :
la détermination, en réponse à l'ajustement du temps de suppression verticale du capteur d'image, qu'un autre délai entre un autre signal de synchronisation et un autre début de trame se situe dans un seuil de tolérance ; et
le fait de s'abstenir d'ajuster le temps de suppression verticale du capteur d'image.

5. Procédé selon l'une quelconque des revendications précédentes, dans lequel :
le délai entre le signal de synchronisation et le début de trame indique une marge positive ; et
l'ajustement du temps de suppression verticale sur la base de l'indication d'une marge positive comprend le fait de retarder le début futur de trame en augmentant le temps de suppression verticale.

6. Procédé selon l'une quelconque des revendications 1 à 4, dans lequel :
le délai entre le signal de synchronisation et le début de trame indique une marge négative ; et
l'ajustement du temps de suppression verticale sur la base de l'indication d'une marge négative comprend le fait d'avancer le début futur de trame en diminuant le temps de suppression verticale.

7. Procédé selon l'une quelconque des revendications précédentes, comprenant également :
la programmation, avant la transmission du signal de synchronisation, d'un registre du capteur d'image, la programmation étant efficace pour initialiser un seuil de tolérance pour une durée acceptable du délai.

8. Procédé selon l'une quelconque des revendications précédentes, dans lequel le capteur d'image est l'un d'une pluralité de capteurs d'image, chaque capteur d'image de la pluralité de capteurs d'image :
la réception de la demande de trame et du signal de synchronisation ; et
la génération, sur la base de la demande de trame, d'un début de trame respectif.

9. Procédé selon la revendication 8, dans lequel :
la détermination du délai entre le signal de synchronisation et le début de trame est déterminé par au moins un capteur d'image de la pluralité de capteurs d'image et en réponse à la génération du début de trame respectif ; et
l'ajustement du temps de suppression verticale est effectué par l'au moins un capteur d'image de la pluralité de capteurs d'image et sur la base du délai.

10. Procédé selon la revendication 9, comprenant également :
la réception, après ajustement du temps de suppression verticale par l'au moins un capteur d'image de la pluralité de capteurs d'image, d'une pluralité de signaux de synchronisation à chacun de la pluralité de capteurs d'image, la pluralité de signaux de synchronisation étant reçus séquentiellement et à une fréquence constante ;
la génération, pour un ou plusieurs signaux de synchronisation de la pluralité de signaux de synchronisation et à chaque capteur d'image de la pluralité de capteurs d'image, d'une pluralité de débuts de trames et d'une pluralité correspondante de fins de trames, un début de trame respectif de la pluralité de débuts de trames et une fin de trame correspondante respective de la pluralité correspondante de fins de trames indicatives d'une trame d'image générée respective d'une pluralité de trames d'images générées ;
la génération, pour chaque capteur d'image de la pluralité de capteurs d'image, des métadonnées de synchronisation relatives aux délais entre les signaux de synchronisation et le début des trames pour l'une ou plusieurs de la pluralité de trames d'images générées ;
l'alignement, sur la base des métadonnées de synchronisation relatives aux délais, de deux trames d'images générées ou plus de la pluralité de trames d'images générées ;
la fusion, basée sur l'alignement des deux trames d'images générées ou plus, des deux trames d'images générées ou plus suffisantes pour produire une image fusionnée ; et
la présentation de trame fusionnée sur l'écran d'un dispositif électronique.

11. Procédé selon la revendication 10, dans lequel la pluralité de signaux de synchronisation reçus séquentiellement et à la fréquence cohérente sont reçus à une fréquence correspondant à une première fréquence de trames d'un premier capteur d'image de la pluralité de capteurs d'image, la première fréquence de trames du premier capteur d'image étant plus rapide qu'une seconde fréquence de trames d'un deuxième capteur d'image de la pluralité de capteurs d'image.

12. Procédé selon l'une quelconque des revendications 9 à 11, dans lequel la pluralité de capteurs d'image comprend trois capteurs d'image, chacun des trois capteurs d'image étant réglé à des niveaux de zoom et/ou d'exposition différents.

13. Procédé selon la revendication 12, dans lequel :
la détermination du délai entre le signal de synchronisation et le début de trame comprend la détermination, par un premier capteur d'image et un deuxième capteur d'image parmi les trois capteurs d'image, d'un premier délai et d'un second délai, le premier délai étant différent du second délai ; et
l'ajustement du temps de suppression verticale par l'au moins un capteur d'image de la pluralité de capteurs d'image comprend l'ajustement, sur la base du premier délai et du second délai, du temps de suppression verticale du premier capteur d'image et du deuxième capteur d'image, respectivement, de manière à :
avancer le début futur de trame pour le premier capteur d'image et le deuxième capteur d'image ;
retarder le début futur de trame pour le premier capteur d'image et le deuxième capteur d'image ;
avancer le début futur de trame pour le premier capteur d'image et retarder le début futur de trame pour le deuxième capteur d'image ; ou
retarder le début futur de trame pour le premier capteur d'image et avancer le début futur de trame pour le deuxième capteur d'image.

14. Appareil comprenant :
un capteur d'image (108) configuré pour réaliser le procédé selon l'une quelconque des revendications 1 à 6.

15. Appareil selon la revendication 14, comprenant également :
un ou plusieurs capteurs d'image supplémentaires et au moins un processeur configuré pour réaliser le procédé selon l'une quelconque des revendications 7 à 13.
